# EUROPEAN PATENT SPECIFICATION

(11) **EP 2 626 453 B1**
(45) Date of publication and mention of the grant of the patent: **06.04.2016**
(21) Application number: 11830471.6
(22) Date of filing: 09.09.2011
(51) Int. Cl.: D01H 11/00, D01H 1/115, D01H 13/22, B01D 46/10, B01D 50/00, B01D 45/14

(54) **SUCKING AND SEPARATING DEVICE AND TEXTILE MACHINE INCLUDING THE SAME**
SAUG- UND TRENNVORRICHTUNG UND DAMIT VERSEHENE TEXTILMASCHINE
DISPOSITIF D'ASPIRATION ET DE SÉPARATION ET MACHINE TEXTILE ÉQUIPÉE D'UN TEL DISPOSITIF

(30) Priority: 05.10.2010 JP 2010225845
(43) Date of publication of application: 14.08.2013
(73) Proprietor: Murata Machinery, Ltd., Kyoto-shi, Kyoto 601-8326 (JP)
(72) Inventor: TAKEUCHI Hidetoshi, Kyoto-shi Kyoto 612-8686 (JP)
(74) Representative: Weickmann & Weickmann
(86) International application number: PCT/JP2011/070583
(87) International publication number: WO 2012/046538

(56) References cited:
- DE-A1-102004 038 697
- JP-A- 6 173 128
- JP-A- 2009 097 109
- JP-U- 62 141 081
- US-A- 3 086 348

## Description

### [Technical Field]

The present invention relates to a sucking and separating device and a textile machine including the same.

### [Background Art]

A dust collector has conventionally been known that is provided in a textile machine such as an automatic spinning machine and an automatic winder. The dust collector collects and processes cotton flies, dusts, and the like produced during the operation of the textile machine. For example, Patent Document 1 discloses a configuration of a dust box. The dust box is disposed on an end portion of a machine stand of the textile machine, and includes a suction fan and a filter. The cotton flies are collected by the filter of the dust box.

Patent Document 2 discloses a configuration of a textile machine including a plurality of grouped units, in which a blower and a cotton fly separator are provided for each group. With the blower and the cotton fly separator being provided for each group, pressure loss of an integration duct is reduced, and a sectional area of the integration duct can be reduced.

### [Related Art Documents]

### [Patent Documents]

**[Patent Document 1]** Japanese Unexamined Utility Model Application Publication No. H3-99782.
**[Patent Document 2]** Japanese Unexamined Patent Application Publication No. 2009-97109.

### [Disclosure of the Invention]

### [Problems to be Solved by the Invention]

However, in the conventional textile machines described above, all the air sucked in the units are exhausted to the integration duct. Thus, an increase in the number of units leads to an increase in an amount of air exhausted to the integration duct. The increase in an amount of air exhausted to the integration duct necessitates the increase in the sizes of the integration duct and an integration blower. The increase in the sizes of the integration duct and the integration blower leads to a problem that the size, power consumption, and cost of the textile machine are increased. DE-A-10 2004 038 697 discloses a known suching and separating device.

The object to be achieved by the present invention is to provide a sucking and separating device that prevents the increase in the size of the integration duct while surely separating air and cotton flies, and a textile machine including the same.

### [Means of Solving the Problems]

The problem to be solved by the present invention is as described above, and next, means of solving the problems are defined in claim 1.

Dependent claims 2-10 define further embodiments.

### [Effects of the Invention]

As the effects of the present invention, the following effects are obtained.

According to the invention, the removed object can be sucked, while only the air in the suction flow including the air and the cotton fly is exhausted to the external through the second exhaust portion. Thus, the cotton flies and the air can be surely separated. Only the air in the suction flow including the air and the cotton flies is exhausted to the external through the second exhaust portion. Thus, the amount of air exhausted to the integration duct can be reduced, and thus the increase in size of the integration duct can be prevented.

### [Brief Description of the Drawings]

[FIG. 1] FIG. 1 is a front view showing an overall configuration of a spinning machine according to an embodiment of the present invention.
[FIG. 2] FIG. 2 is a vertical cross-sectional view of a spinning unit according to an embodiment of the present invention.
[FIG 3] FIG. 3 is a configuration diagram showing a configuration of a dust collector according to an embodiment of the present invention.
[FIG 4] FIG. 4A and FIG 4B are respectively a side view and a rear view of a sucking and separating device according to an embodiment of the present invention.
[FIG 5] FIG. 5 is a schematic view showing a state where air passes through a net according to an embodiment of the present invention.
[FIG 6] FIG. 6 is a perspective view showing an operation of the sucking and separating device according to an embodiment of the present invention.

### [Best Mode for Carrying Out the Invention]

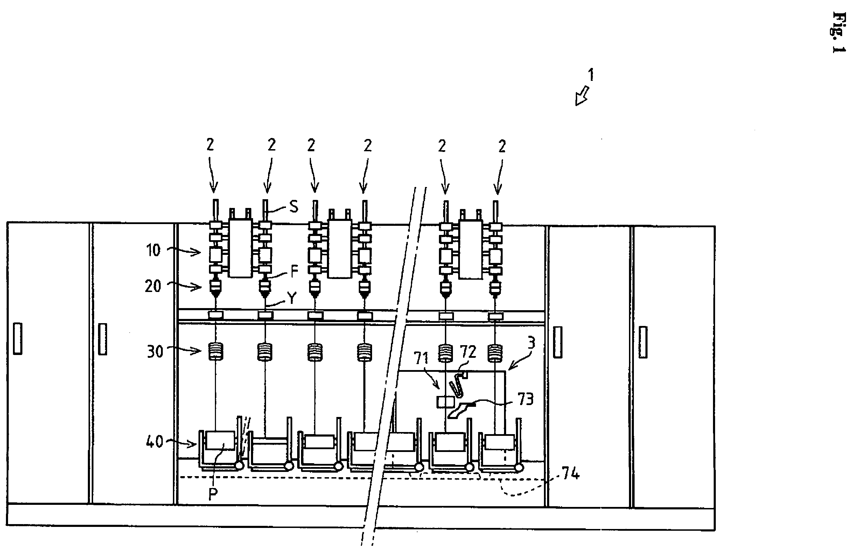

A spinning machine 1 as a spinning machine of this embodiment will be described with reference to FIG. 1. In the description below, "upstream" and "downstream" respectively refer to the upstream and the downstream in a traveling direction of a yarn at the time of spinning.

The spinning machine 1 includes spinning units 2 as a plurality of winding units arranged in parallel and a splicer carriage 3.

Each spinning unit 2 includes a drafting device 10, a spinning device 20, a yarn slack remover 30, and a winding device 40 in this order from the upstream side to the downstream side. A sliver S drawn out from a can (not illustrated) is drafted by the drafting device 10. A fiber bundle F sent from the drafting device 10 is sent out as a yarn Y from the spinning device 20. The yarn Y sent out from the spinning device 20 is further sent by the yarn slack remover 30 and then is wound by the winding device 40. Thus, a package P is formed.

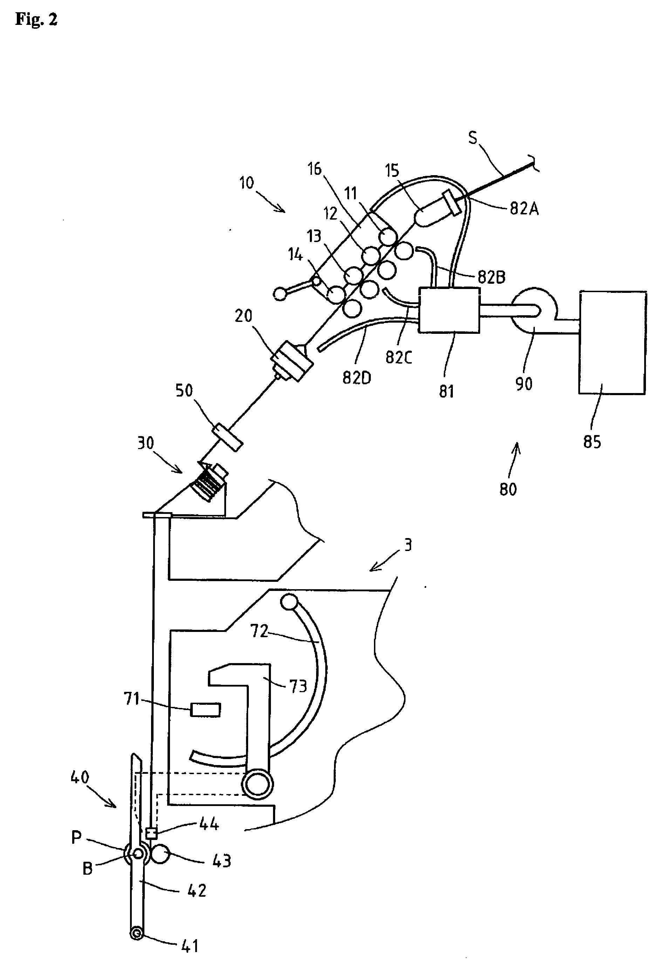

The spinning unit 2 will be further described with reference to FIG 2. The drafting device 10 includes: a line of four roller pairs formed of a pair of back rollers 11, 11, a pair of third rollers 12, 12, a pair of second rollers 13, 13, and a pair of front rollers 14, 14; a trumpet guide 15; and a draft cradle 16. The trumpet guide 15 is disposed in such manner as to guide the sliver S to the pair of back rollers 11, 11. Top rollers of the drafting device 10 are rotatably supported by the draft cradle 16 and are in pressure contact with respective bottom rollers. The top rollers can be in contact with and can be separated from the respective bottom rollers.

The spinning device 20 is an air-operated device that twists the fiber bundle F by means of swirling airflow to form the yarn Y

The yarn slack remover 30 is disposed on the downstream side of the spinning device 20. The yarn slack remover 30 has a function of drawing the yarn Y out of the spinning device 20 while applying a predetermined tension to the yarn Y. The yarn slack remover 30 has a function of preventing the yarn Y from slacking by holding the yarn Y sent out from the spinning device 20 at the time of yarn splicing by the yarn splicer carriage 3 to be described later. The yarn slack remover 30 has a function of adjusting the tension so that the tension change on the side of the winding device 40 to be described later is not transmitted to the side of the spinning device 20.

A yarn clearer 50 is disposed between the spinning device 20 and the yarn slack remover 30. The yarn Y spun from the spinning device 20 passes through the yarn clearer 50 before being wound around the yarn slack remover 30. The yarn clearer 50 monitors the thickness of the traveling yarn Y and transmits a yarn defect detection signal to a unit controller (not shown) upon detecting a yarn defect of the yarn Y The yarn clearer 50 may be configured to detect whether a foreign object is included in the yarn Y.

A waxing device (not shown) that applies wax on the travelling yarn Y may be disposed on the downstream side of the yarn slack remover 30.

The yarn splicer carriage 3 includes a splicer 71, a suction pipe 72, and a suction mouth 73. When yarn breakage or yarn cutting for removing the yarn defect occurs in a certain spinning unit 2, the yarn splicer carriage 3 runs on a rail 74 to that spinning unit 2 and stops there (see FIG. 1). The suction pipe 72 sucks and captures an end of the yarn sent out from the spinning device 20 while rotating about the shaft to move in an upper-lower direction, and guides the yarn to the splicer 71. The suction mouth 73 sucks and captures an end of the yarn from the package P supported by the winding device 40 while rotating about the shaft to move in an upper-lower direction, and guides the yarn to the splicer 71. The splicer 71 splices the ends of the guided yarns.

The winding device 40 includes a cradle arm 42 supported swingably about a supporting shaft 41. The cradle arm 42 rotatably supports a bobbin B for winding the yarn Y. The winding device 40 includes a winding drum 43 and a traverse device 44. The winding drum 43 is driven while being in contact with an outer peripheral surface of the bobbin B or the package P. The traverse device 44 includes a traverse guide that can engage with the yarn Y. In the traverse device 44, a driving means makes the traverse guide reciprocate, and thus makes the yarn traverse in a width direction of the package P. The winding device 40 makes the package P in contact with the winder drum 43 rotate, and thus winds the yarn Y into the package P while traversing the yarn Y with the traverse device 44.

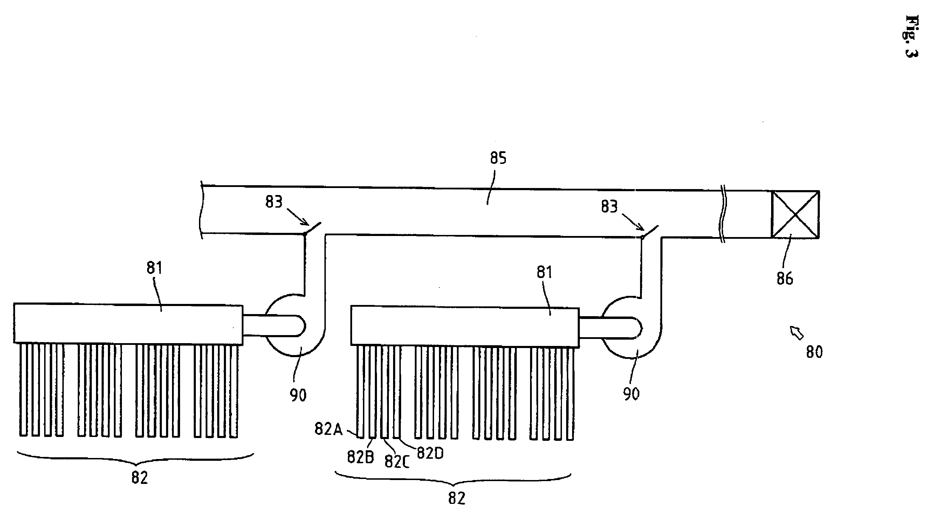

A dust collector 80 will be described with reference to FIG. 2 and FIG. 3. The dust collector 80 includes an integration duct 85 and an integration blower 86. In the dust collector 80 of this embodiment, one integration duct 85 and one integration blower 86 are provided for one spinning machine 1 including the plurality of spinning units 2. The cotton flies and the air exhausted from sucking and separating devices 90 to be described later are collected in the integration duct 85 in an integrated manner. The integration blower 86 sucks the cotton flies and the air passing through the integration duct 85, and produces airflow in the integration duct 85.

The dust collector 80 includes unit ducts 81, flexible ducts 82, shutters 83 as shutter members, and the sucking and separating devices 90. In the dust collector 80, one unit duct 81 is provided for each group of four spinning units 2. The unit duct 81 is coupled to the integration duct 85 through the sucking and separating device 90. A plurality of the flexible ducts 82 are coupled to the unit duct 81. In the unit duct 81, cotton flies and air exhausted from the flexible ducts 82 are collected in an integrated manner.

The flexible duct 82 is disposed near the drafting device 10 and the spinning device 20 of the spinning unit 2. Flexible ducts 82A, 82B, 82C, and 82D have their opening sides disposed around the drafting device 10 and the spinning device 20 and thus suck the cotton flies from the drafting device 10 and the spinning devices 20 (see FIG 2). The flexible duct 82A has its opening side disposed near the draft cradle 16 of the drafting device 10. The flexible ducts 82B and 82C have their opening sides disposed near the respective bottom roller sides of the drafting device 10. The flexible duct 82D is disposed above and near the spinning device 20.

The shutter 83 is disposed between each sucking and separating device 90 and the integration duct 85. The shutter 83 is disposed in an openable and closable manner so as to be able to block airflow between the sucking and separating device 90 and the integration duct 85. If the airflow between the sucking and separating device 90 and the integration duct 85 is not to be blocked, the shutter 83 may be omitted.

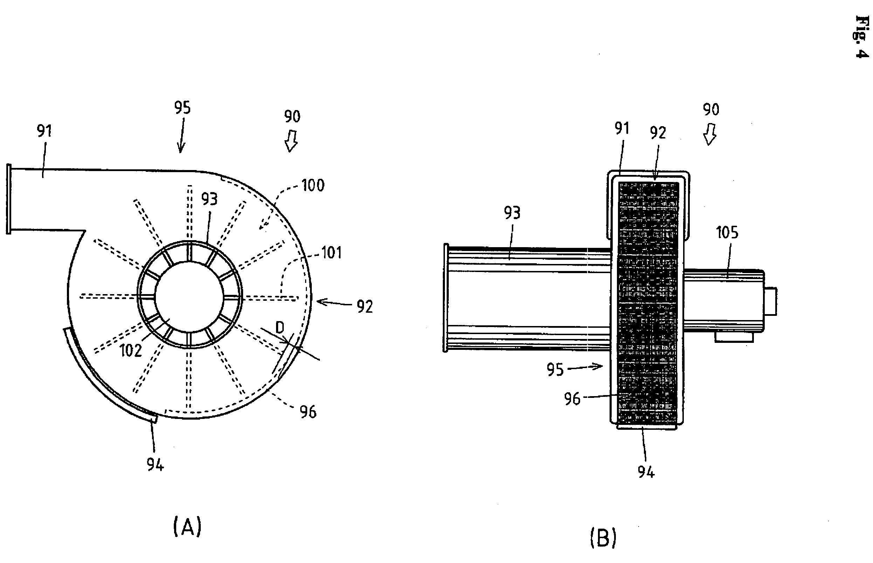

The sucking and separating device 90 will be described with reference to FIG. 4.

FIG. 4A is a front view of the sucking and separating device 90 and FIG. 4B is a side view of the sucking and separating device 90. For the better understanding of the description, a side on which an intake duct 93 of the sucking and separating device 90 to be described later in FIG. 4 is disposed is defined as a front side of the sucking and separating device 90.

The sucking and separating device 90 includes a case 95 as a casing and a plate fan 100 as a suction flow generating device. The case 95 is formed to have a cylindrical shape. The plate fan 100 is arranged in the case 95.

The case 95 includes a first exhaust duct 91 as a first exhaust portion, a second exhaust port 92 as a second exhaust portion, the intake duct 93 as an intake portion, a net 96 as an air permeable member, and a cover 94 as a switching member. When the cylindrical case 95 is viewed from the front as a circle, the first exhaust duct 91 extends in a tangential direction of the circle, on the side wall of the cylinder. The second exhaust port 92 is formed on the side surface of the case 95 opposite to the side on which the first exhaust duct 91 is formed. The intake duct 93 extends to penetrate the center of the cylindrical case 95.

The net 96 is disposed to cover the second exhaust port 92. The net 96 is provided for removing the cotton fly of the cotton fly and the air sucked by the plate fan 100, and discharging a part of the air through the second exhaust port 92. The cotton flies separated by the net 96 accumulate on the inner surface side of the net 96, and by the airflow produced by the plate fan 100, move along the inner peripheral surface of the case 95 in a sliding or tumbling manner to be exhausted through the first exhaust duct 91.

The cover 94 is slidable along the side surface of the cylindrical case 95 while partially covering the outer side of the second exhaust port 92. The sliding of the cover 94 is achieved manually or through a driving device. The size of the cover 94 may be the same as that of the second exhaust port 92 so that the second exhaust port 92 can be closed or opened.

The plate fan 100 produces the suction flow for sucking the cotton flies produced in the plurality of spinning units 2. The plate fan 100 includes plates 101 as blade members, a shaft 102, and an electric motor 105 as a driving device. The plates 101 have a flat plate shape and radially stand on the shaft 102. All the plates 101 are disposed on the inner side of the case 95 while being apart from the net 96 by a predetermined distance D and radially standing on the shaft 102. The predetermined distance D is of a sufficient length for the plates 101 to contact and scrape out the cotton flies when the cotton flies are accumulated on the inner side surface of the net 96. Alternatively, the predetermined distance D is of a sufficient length for the accumulated cotton flies to be separated from the net 96 by the airflow produced by the plates 101, even if the plates 101 do not contact the cotton flies. The electric motor 105 is disposed on the side of the cylindrical case 95 opposite to the side on which the intake duct 93 is disposed, and drivingly rotates the shaft 102.

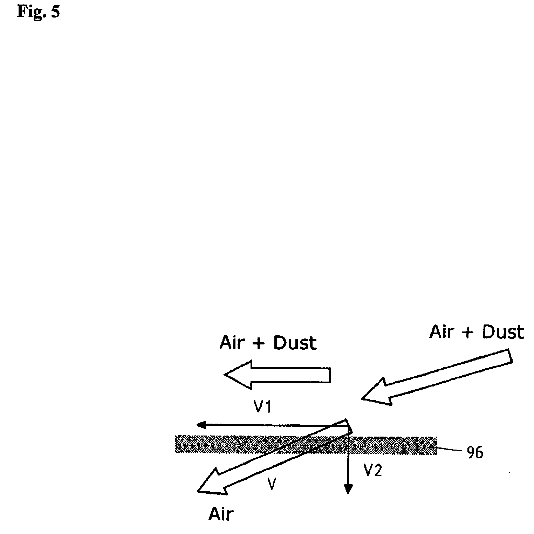

The net 96 will be described more in detail with reference to FIG. 5. First, the plate fan 100 rotates in the case 95 so that the airflow from the intake duct 93 to the first exhaust duct 91 is produced in the case 95. In particular, on a side surface of the case 95 opposite to the side where the first exhaust duct 91 is formed, the airflow along the side surface of the case 95 is produced. The net 96 is disposed on the side surface on the side of the case 95 opposite to the side where the first exhaust duct 91 is formed. Since the net 96 is disposed at that position, the airflow in the radial direction of the case 95, that is, the airflow passing through the net 96 is produced.

Here, an average flow velocity of the airflow on the inner surface side of the net 96 is defined as an average flow velocity V. The average flow velocity V is broken down into two velocity components: an average flow velocity V1 of air flowing along the net 96 (does not pass through the net 96); and an average flow velocity V2 of air passing through the net 96. The net 96 is designed in such a manner that the average flow velocity V1 becomes four times as high as the average flow velocity V2 or higher. Specifically, the thickness of the net 96, the size of the net 96, the mesh (representing the mesh size, that is, the number of meshes per square inch) of the net 96, and the like are set in such manner that the average flow velocity V1 becomes four times as high as the average flow velocity V2 or higher.

The net 96 is designed as described above for the following reasons. Specifically, a higher average flow velocity V2 of the air passing through the net 96 relative to the average flow velocity V1 of the air moving along the net 96 is directly related to a higher cotton fly removing performance of the net 96. Moreover, an amount of air exhausted from the second exhaust port 92 increases, and thus an amount of air exhausted to the integration duct 85 from the first exhaust duct 91 can be reduced. However, a higher average flow velocity V2 imposes a problem that the cotton flies easily accumulate on the inner side surface of the net 96. On the other hand, a smaller average flow velocity V2 relative to the average flow velocity V1 makes the cotton flies less likely to accumulate on the inner side surface of the net 96, but is directly related to a lower cotton fly removing performance of the net 96. Moreover, an amount of air exhausted from the second exhaust port 92 is reduced, and an amount of air exhausted to the integration duct 85 from the first exhaust duct 91 is increased.

As described above, the relationship between the average flow velocity V1 of the air moving along the net 96 and the average flow velocity V2 of the air passing through the net 96 largely affects the cotton fly removing performance in the sucking and separating device 90, and the amount of air exhausted from the sucking and separating device 90 to the integration duct 85. For balancing the cotton fly removing performance in the sucking and separating device 90 and the amount of air exhausted from the sucking and separating device 90 to the integration duct 85, the amount of air exhausted from the first exhaust duct 91 to the integration duct 85 is preferably 25% to 50% of the amount of air sucked by the sucking and separating device 90 from the intake duct 93. To achieve the above-described ratio between the amount of air exhausted from the sucking and separating device 90 to the integration duct 85 and the amount of air sucked by the sucking and separating device 90, the net 96 is preferably designed in such a manner that the average flow velocity V1 becomes four times as high as the average flow velocity V2 or higher.

The operation and the effect of the embodiment are described below.

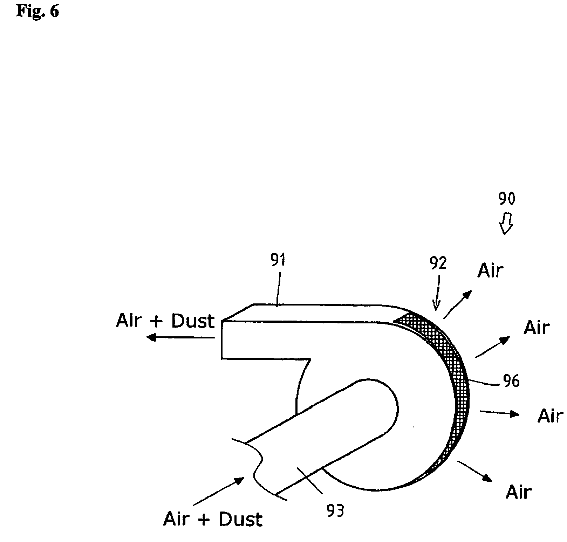

The operation of the sucking and separating device 90 is described with reference to FIG. 6.

In the sucking and separating device 90, by the rotation of the plate fan 100, the outward airflow from the center is produced by the centrifugal force on the downstream side in the rotational direction of the plate fan 100 in the case 95. The centrifugal force makes the air and the cotton flies that entered the sucking and separating device 90 from the intake duct 93 flow toward the first outlet duct 91 along the inner side surface of the cylindrical case 95.

The net 96 covers the second exhaust port 92. Thus, in the second exhaust port 92, of the air and the cotton flies that are made to flow outward by the centrifugal force, the cotton flies accumulate on the inner side of the net 96, and only the air is exhausted out through the net 96. When the cotton flies accumulate on the inner side of the net 96 for a certain amount, the air flowing along the net 96 discharges the cotton flies toward the first exhaust duct 91. The second exhaust port 92 never sucks the air from the external, because the outward airflow from the center is produced by the centrifugal force in the case 95.

When the cotton flies further accumulate on the inner side of the net 96, for example, up to the accumulated amount reaching or exceeding the height D, the cotton flies are scraped out by the plates 101 of the plate fan 100. The air flowing along the net 96 exhausts the scraped cotton flies toward the first exhaust duct 91.

When the cover 94 slides to partially cover the second exhaust port 92 (see FIG. 4), a smaller amount of air passes through the second exhaust port 92 covered by the net 96, and the amount of air that flows along the net 96 relatively increases. Thus, separation of the cotton flies accumulated on the net 96 is facilitated.

Since the net 96 is designed in such a manner that the average flow velocity V1 becomes four times as high as the average flow velocity V2 or higher, the amount of air that flows into the integration duct 85 is 25% to 50% of the amount of air sucked by the sucking and separating device 90, that is, the air that passes through the intake duct 93.

The effect of the sucking and separating device 90 will be described.

The sucking and separating device 90 can suck the cotton flies in the suction flow including the air and the cotton flies, while discharging only the air to the external through the second exhaust port 92. Thus, the sucking and separating device 90 can surely separate the cotton flies and the air. The sucking and separating device 90 exhausts a part of the air in the suction flow including the air and the cotton flies to the external through the second exhaust port 92. Thus, the amount of air exhausted to the integration duct 85 can be made small, and thus the increase in size of the integration duct 85 can be prevented.

Even when the cotton flies are accumulated on the inner side of the side surface of the case 95, the cotton flies can be scraped out by the plates 101.

The net 96 is designed in such a manner that the average flow velocity V1 of the air moving along the net 96 becomes four times as high as the average flow velocity V2 of the air passing through the net 96 or higher. Thus, the cotton flies can be collected from the spinning unit 2 while the unnecessary air is exhausted through the net 96 in the sucking and separating device 90.

The cotton flies accumulated on the net 96 in a portion covered by the cover 94 is separated from the net 96, and can be exhausted to the integration duct 85. Even when the cotton flies accumulate on the net 96, the textile machine 1 can be continuously operated while the cotton flies are removed.

An effect of the dust collector 80 will be described.

In the dust collector 80, the sucking and separating device 90 produces the airflow from the spinning unit 2 to the integration duct 85. Thus, the cotton flies collected from the spinning units 2 can be surely exhausted to the integration duct 85.

In the dust collector 80, the shutters 83 block the airflow between the sucking and separating devices 90 and the integration duct 85. Thus, the sucking and separating devices 90 can be removed easily. Accordingly, the sucking and separating devices 90 can be easily maintained. Here, only the sucking and separating device 90 to be maintained can be removed from the textile machine 1, while the rest of the sucking and separating devices 90 continue their operation. Thus, the winding operation for the package P can be continued in the spinning units 2 coupled to the sucking and separating devices 90 continuing their operation. Thus, the productivity can be improved in the textile machine 1 as a whole.

In the dust collector 80, one unit duct 81 is provided for each group of four spinning units 2. Thus, the integration duct 85 and the integration blower 86 can have smaller configurations, and the power consumption of the textile machine 1 as a whole can be reduced.

In the embodiment, the air permeable member is the net 96. However, the configuration is not limited to this. For example, the air permeable member may be a nonwoven fabric that covers the second exhaust port 92. Thus, materials other than the net and the nonwoven fabric that can separate the air and the cotton flies and transmit air without transmitting the cotton flies may be used as the air transmitting member.

In the embodiment, the second exhaust port 92 is formed on a side surface of the case 95. However, the configuration is not limited to this. The second exhaust port 92 may be formed at any intermediate portion of the airflow from the suction duct 93 to the first exhaust duct 91 produced by the plate fan 100. For example, the second exhaust port 92 can be formed on the front surface or the rear surface of the case 95. If the second exhaust port 92 is formed on the front surface or the rear surface of the case 95, all the plates 101 are apart from inner sides of the front surface and the rear surface of the case 95 by the predetermined distance D.

In the embodiment, the suction flow generating device is the plate fan 100. However, the configuration is not limited to this. For example, the suction flow generating device may be a turbo fan. Alternatively, the suction flow generating device may be other rotating bodies.

In the embodiment, the case 95 is configured to have a cylindrical shape. The shape is not limited to this and any shape can be employed as long as an internal wall surface conforms to the air flow produced by the plate fan 100.

In the embodiment, the cover 94 is configured to be slidable along the side surface of the cylindrical case 95. However, the configuration is not limited to this. If a large amount of cotton flies never accumulate on the net 96, the cover 94 may be omitted.

In the embodiment, one unit duct 81 is provided for each group of four spinning units 2. However, the configuration is not limited to this. For example, one unit duct 81 may be provided for one spinning unit 2, or for a group of two, three, or five or more spinning units 2.

In the embodiment, the spinning machine includes air-operated spinning units. However, the configuration is not limited to this. For example, the present invention can be applied to any textile machines including an automatic winder, a yarn twisting machine, a doubler, and the like where the yarns are rubbed on each other and thus the cotton flies are produced.

An automatic winder generally includes a yarn feeding portion, a tension applying device, a yarn defect detector (clearer), a yarn splicer, and a winder. The automatic winder winds the yarns unraveled from the yarn feeding bobbin around a winding bobbin while traversing the yarns, and thus forms a package having a predetermined length and a predetermined shape.

The yarn feeding portion includes a holding portion that holds the yarn feeding bobbin and an unwinding assistance device. The unwinding assistance device moves a regulation member covering a core tube in conjunction with the unwinding of the yarns from the yarn feeding bobbin, and thus assists the unwinding of the yarns from the yarn feeding bobbin. The regulation member comes into contact with a balloon formed above the yarn feeding bobbin as the yarns unraveled from the yarn feeding bobbin are swung and applies an appropriate tension to the balloon, and thus assists the unwinding of the yarns.

A known gate tensioner or disk tensioner can be used as the tension applying device. The tension applying device applies a predetermined tension to the yarns to be wound into a package. The yarn defect detector detects whether there is a yarn defect before the yarns from the yarn feeding bobbin are wound into the package in the winder. When the yarn defect is detected by the yarn defect detector, the automatic winder cuts the yarns and removes the yarn defect, the yarn splicer splices the yarns, and the winder resumes the winding.

In such an automatic winder, a suction mouth of the flexible duct 82 of the sucking and separating device 90 may be disposed near the tension applying device, so that the sucking and separating device 90 sucks and separates the cotton flies and the like produced in the tension applying device. Alternatively, the suction mouth of the flexible duct 82 of the sucking and separating device 90 may be disposed near the yarn feeding portion so that the sucking and separating device 90 sucks and separates the cotton flies and the like produced in the yarn feeding portion.

### [Industrial Applicability]

The sucking and separating device and the textile machine including the same of the present invention can reduce the amount of air exhausted to the integration duct and prevent the increase in size of the integration duct, and thus is industrially useful.

### [Description of the Reference Numeral]

- 1: Spinning machine (textile machine)
- 2: Spinning unit (winding unit)
- 80: Dust collector
- 81: Unit duct
- 83: Shutter (shutter member)
- 85: Integration duct
- 86: Integration blower
- 90: Sucking and separating device
- 91: First exhaust duct (first exhaust portion)
- 92: Second exhaust port (second exhaust portion)
- 93: Intake duct (intake portion)
- 94: Cover (switching member)
- 95: Case (casing)
- 96: Net (air permeable member)
- 100: Plate fan (suction flow generating device)
- 101: Plate (blade member)
- 105: Electric motor (driving device)

## Claims

1. A sucking and separating device (90) disposed in a textile machine (1), the sucking and separating device (90) comprising
a suction flow generating device (100) configured to produce suction flow for sucking a removed object;
a casing (95) configured to contain the suction flow generating device (100);
an intake portion (93) formed in the casing (95);
a first exhaust portion (91) formed in the casing (95); **characterized by**
a second exhaust portion (92) formed in the casing (95) and at an intermediate portion of a flow path formed by the intake portion (93) and the first exhaust portion (91), and covered by an air permeable member (96) configured to separate the removed object and air.

2. The sucking and separating device (90) according to claim 1, **characterized in that** the suction flow generating device (100) comprises:
a plurality of blade members (101); and
a driving device (105) configured to drivingly rotate the blade members (101),
wherein free ends of the blade members (101) are configured to rotate at positions on an inner side of the casing (95) and apart from the air permeable member (96) covering the second exhaust portion (92) by a predetermined distance (D).

3. A textile machine (1) comprising:
a winding unit (2) configured to wind a yarn; **characterized by**
the sucking and separating device (90) according to claim 1 or 2, configured to suck and collect a removed object produced in the winding unit (2);
an integration duct (85) through which at least the removed object collected by the sucking and separating device (90) flows, coupled to the first exhaust portion (91) of the sucking and separating device (90); and
an integration blower (86) configured to produce airflow in the integration duct (85).

4. The textile machine (1) according to claim 3, **characterized in that** at least an area, a thickness, and a passage rate of the air permeable member (96) are set in such a manner that an average flow velocity of air moving along the air permeable member (96) becomes four times as high as an average flow velocity of air passing through the air permeable member (96) or higher.

5. The textile machine (1) according to claim 3 or 4, **characterized in that** the suction flow generating device (100) produces suction flow from the winding unit (2) to the integration duct (85).

6. The textile machine (1) according to any one of claims 3 to 5 further **characterized by** a shutter member (83) disposed movably between the sucking and separating device (90) and the integration duct (85).

7. The textile machine (1) according to any one of claims 3 to 6 further comprising:
a plurality of the winding units (2); and **characterized by**
a unit duct (81) through which the removed object and air flow, provided for each group of a predetermined number of the winding units (2) of the plurality of winding units (2),
wherein the sucking and separating device (90) is disposed to couple the unit duct (81) with the integration duct (85).

8. The textile machine (1) according to any one of claims 3 to 7 further **characterized by** a switching member (94) configured to open or close the second exhaust portion (92) covered by the air permeable member (96).

9. The textile machine (1) according to any one of claims 3 to 8, **characterized in that** the winding unit (2) comprises:
a drafting device configured to draft a sliver;
an air-operated spinning device configured to twist the sliver drafted by the drafting device by means of swirling airflow to form a yarn; and
a winder configured to wind the yarn formed in the air-operated spinning device into a package.

10. The textile machine (1) according to any one of claims 3 to 8, **characterized in that** the winding unit (2) comprises:
a yarn feeding portion configured to feed a yarn;
a defect detector configured to detect a defect of the yarn fed from the yarn feeding portion; and
a winder configured to wind the yarn into a package.

## Patentansprüche

1. Sauge- und Trennvorrichtung (90), welche in einer Textilmaschine (1) angeordnet ist, wobei die Sauge- und Trennvorrichtung (90) umfasst:
eine Saugstrom-Erzeugungsvorrichtung (100), welche dazu eingerichtet ist, einen Saugstrom zum Ansaugen eines gelösten Objekts zu erzeugen;
ein Gehäuse (95), welches dazu eingerichtet ist, die Saugstrom-Erzeugungsvorrichtung (100) aufzunehmen;
einen in dem Gehäuse (95) gebildeten Einlassabschnitt (93);
einen in dem Gehäuse (95) gebildeten ersten Auslassabschnitt (91); **gekennzeichnet durch**
einen zweiten Auslassabschnitt (92), welcher in dem Gehäuse (95) und an einem Zwischenabschnitt eines **durch** den Einlassabschnitt (93) und den ersten Auslassabschnitt (91) gebildeten Strömungsweg gebildet ist und von einem luftdurchlässigen Element (96) bedeckt ist, welches dazu eingerichtet ist, das gelöste Objekt und Luft zu trennen.

2. Sauge- und Trennvorrichtung (90) nach Anspruch 1, **dadurch gekennzeichnet, dass** die Saugstrom-Erzeugungsvorrichtung (100) umfasst:
eine Mehrzahl von Blattelementen (101); und
eine Antriebsvorrichtung (105), welche dazu eingerichtet ist, die Blattelemente (101) angetrieben zu rotieren,
wobei freie Enden der Blattelemente (101) dazu eingerichtet sind, an Positionen an einer inneren Seite des Gehäuses (95) und von dem luftdurchlässigen Element (96), welches den zweiten Auslassabschnitt (92) bedeckt, um einen vorbestimmten Abstand (D) getrennt zu rotieren.

3. Textilmaschine (1), umfassend:
eine Wickeleinheit (2), welche dazu eingerichtet ist, ein Garn zu wickeln; **gekennzeichnet durch**:
die Sauge- und Trennvorrichtung (90) nach Anspruch 1 oder 2, welche dazu eingerichtet ist, ein gelöstes Objekt anzusaugen und zu sammeln, welches in der Wickeleinheit (2) erzeugt worden ist;
eine Integrationsleitung (85), **durch** welche wenigstens das von der Sauge- und Trennvorrichtung (90) gesammelte gelöste Objekt strömt, gekoppelt mit dem ersten Auslassabschnitt (91) der Sauge- und Trennvorrichtung (90); und
ein Integrationsgebläse (86), welches dazu eingerichtet ist, einen Luftstrom in der Integrationsleitung (85) zu erzeugen.

4. Textilmaschine (1) nach Anspruch 3, **dadurch gekennzeichnet, dass** wenigstens eine Fläche, eine Dicke und eine Durchlassrate des luftdurchlässigen Elements (96) derart festgelegt sind, dass eine durchschnittliche Strömungsgeschwindigkeit von sich entlang des luftdurchlässigen Elements (96) bewegender Luft viermal so hoch wird wie eine durchschnittliche Strömungsgeschwindigkeit von durch das luftdurchlässige Element (96) strömender Luft oder höher.

5. Textilmaschine (1) nach Anspruch 3 oder 4, **dadurch gekennzeichnet, dass** die Saugstrom-Erzeugungsvorrichtung (100) einen Saugstrom von der Wickeleinheit (2) zu der Integrationsleitung (85) erzeugt.

6. Textilmaschine (1) nach einem der Ansprüche 3 bis 5, ferner **gekennzeichnet durch** ein Verschlusselement (83), welches bewegbar zwischen der Sauge- und Trennvorrichtung (90) und der Integrationsleitung (85) angeordnet ist.

7. Textilmaschine (1) nach einem der Ansprüche 3 bis 6, ferner umfassend:
eine Mehrzahl von Wickeleinheiten (2); und **gekennzeichnet durch**:
eine Einheitsleitung (81), **durch** welche das gelöste Objekt und Luft strömen, welche für jede Gruppe von einer vorbestimmten Anzahl der Wickeleinheiten (2) aus der Mehrzahl von Wickeleinheiten (2) bereitgestellt ist,
wobei die Sauge- und Trennvorrichtung (90) dazu angeordnet ist, die Einheitsleitung (81) mit der Integrationsleitung (85) zu koppeln.

8. Textilmaschine (1) nach einem der Ansprüche 3 bis 7, ferner **gekennzeichnet durch** ein Umschaltelement (94), welches dazu eingerichtet ist, den von dem luftdurchlässigen Element (96) bedeckten zweiten Auslassabschnitt (92) zu öffnen oder schließen.

9. Textilmaschine (1) nach einem der Ansprüche 3 bis 8, **dadurch gekennzeichnet, dass** die Wickeleinheit (2) umfasst:
eine Ziehvorrichtung, welche dazu eingerichtet ist, ein Faserband zu ziehen;
eine luftbetriebene Spinnvorrichtung, welche dazu eingerichtet ist, das von der Ziehvorrichtung gezogene Faserband mittels eines wirbelnden Luftstroms zu verdrillen, um ein Garn zu bilden; und
einen Wickler, welcher dazu eingerichtet ist, das in der luftbetriebenen Spinnvorrichtung gebildete Garn in einen Garnkörper zu wickeln.

10. Textilmaschine (1) nach einem der Ansprüche 3 bis 8, **dadurch gekennzeichnet, dass** die Wickeleinheit (2) umfasst:
einen Garn-Zufuhrabschnitt, welcher dazu eingerichtet ist, ein Garn zuzuführen;
einen Defektdetektor, welcher dazu eingerichtet ist, einen Defekt des von dem Garn-Zufuhrabschnitt zugeführten Garns zu detektieren; und
einen Wickler, welcher dazu eingerichtet ist, das Garn in einen Garnkörper zu wickeln.

## Revendications

1. Dispositif d'aspiration et de séparation (90) agencé dans une machine textile (1), le dispositif d'aspiration et de séparation (90) comprenant :
un dispositif de génération de flux d'aspiration (100) configuré pour produire un flux d'aspiration pour aspirer un objet défait ;
un boîtier (95) configuré pour contenir le dispositif de génération de flux d'aspiration (100) ;
une partie d'admission (93) formée dans le boîtier (95) ;
une première partie d'échappement (91) formée dans le boîtier (95) ; **caractérisé par** une seconde partie d'échappement (92) formée dans le boîtier (95) et sur une partie intermédiaire d'une voie de flux formée par la partie d'admission (93) et la première partie d'échappement (91), et couverte par un élément perméable à l'air (96) configuré pour séparer l'objet défait et l'air.

2. Dispositif d'aspiration et de séparation (90) selon la revendication 1, **caractérisé en ce que** le dispositif de génération de flux d'aspiration (100) comprend :
une pluralité d'éléments de lame (101) ; et
un dispositif d'entraînement (105) configuré pour faire tourner par entraînement les éléments de lame (101),
dans lequel des extrémités libres des éléments de lame (101) sont configurées pour tourner dans des positions sur un côté intérieur du boîtier (95) et à part de l'élément perméable à l'air (96) couvrant la seconde partie d'échappement (92) d'une distance prédéterminée (D).

3. Machine textile (1) comprenant :
une unité d'enroulement (2) configurée pour enrouler un fil ; **caractérisée par** le dispositif d'aspiration et de séparation (90) selon la revendication 1 ou 2, configuré pour aspirer et collecter un objet défait produit dans l'unité d'enroulement (2) ;
un conduit d'intégration (85) par lequel au moins l'objet défait collecté par le dispositif d'aspiration et de séparation (90) passe, couplé à la première partie d'échappement (91) du dispositif d'aspiration et de séparation (90) ; et
une soufflante d'intégration (86) configurée pour produire un flux d'air dans le conduit d'intégration (85).

4. Machine textile (1) selon la revendication 3, **caractérisée en ce qu'**au moins une superficie, une épaisseur et une vitesse de passage de l'élément perméable à l'air (96) sont définies de telle manière qu'une vitesse moyenne de flux d'air se déplaçant le long de l'élément perméable à l'air (96) devienne quatre fois plus élevée qu'une vitesse moyenne de flux d'air passant par l'élément perméable à l'air (96) ou plus.

5. Machine textile (1) selon la revendication 3 ou 4, **caractérisée en ce que** le dispositif de génération de flux d'aspiration (100) produit un flux d'aspiration de l'unité d'enroulement (2) au conduit d'intégration (85).

6. Machine textile (1) selon l'une quelconque des revendications 3 à 5, **caractérisée en outre par** un élément obturateur (83) agencé de manière mobile entre le dispositif d'aspiration et de séparation (90) et le conduit d'intégration (85).

7. Machine textile (1) selon l'une quelconque des revendications 3 à 6, comprenant en outre :
une pluralité d'unités d'enroulement (2) ; et **caractérisée par**
un conduit d'unité (81), par lequel passent l'objet défait et le flux d'air, prévu pour chaque groupe d'un nombre prédéterminé d'unités d'enroulement (2) de la pluralité d'unités d'enroulement (2),
dans laquelle le dispositif d'aspiration et de séparation (90) est agencé pour coupler le conduit d'unité (81) avec le conduit d'intégration (85).

8. Machine textile (1) selon l'une quelconque des revendications 3 à 7, **caractérisée en outre par** un élément de commutation (94) configuré pour ouvrir ou fermer la seconde partie d'échappement (92) couverte par l'élément perméable à l'air (96).

9. Machine textile (1) selon l'une quelconque des revendications 3 à 8, **caractérisée en ce que** l'unité d'enroulement (2) comprend :
un dispositif d'étirage configuré pour étirer un ruban ;
un dispositif de filage à air configuré pour enrouler le ruban étiré par le dispositif d'étirage à l'aide du flux d'air tourbillonnant pour former un fil ; et
un enrouleur configuré pour enrouler le fil formé dans le dispositif de filage à air dans un emballage.

10. Machine textile (1) selon l'une quelconque des revendications 3 à 8, **caractérisée en ce que** l'unité d'enroulement (2) comprend :
une partie d'amenée de fil configurée pour amener un fil ;
un détecteur de défaut configuré pour détecter un défaut du fil amené par la partie d'amenée de fil ; et
un enrouleur configuré pour enrouler le fil dans un emballage.
